# EUROPÄISCHE PATENTSCHRIFT

(11) **EP 1 523 433 B1**
(45) Veröffentlichungstag und Bekanntmachung des Hinweises auf die Patenterteilung: **14.11.2007**
(21) Anmeldenummer: 03711830.4
(22) Anmeldetag: 20.02.2003
(51) Int. Cl.: B60R 21/01

(54) **SCHUTZEINRICHTUNG F R EIN FAHRZEUG**
PROTECTIVE DEVICE FOR A VEHICLE
DISPOSITIF DE PROTECTION POUR VEHICULE

(30) Priorität: 11.07.2002 DE 10231363
(43) Veröffentlichungstag der Anmeldung: 20.04.2005
(73) Patentinhaber: ROBERT BOSCH GMBH, 70442 Stuttgart (DE)
(72) Erfinder: RINGGER, Klaus, 72622 Nuertingen (DE); SCHOU, Frank, 70565 Stuttgart (DE)
(86) Internationale Anmeldenummer: PCT/DE2003/000523
(87) Internationale Veröffentlichungsnummer: WO 2004/007248

(56) Entgegenhaltungen:
- DE-A- 19 811 182
- DE-A- 19 909 403
- DE-A- 19 960 179
- US-A- 6 045 156

## Beschreibung

### Stand der Technik

Die Erfindung geht aus von einer Schutzeinrichtung für ein Fahrzeug nach der Gattung des unabhängigen Patentanspruchs.

Aus der Offenlegungsschrift DE 199 60179 A1 ist eine Sicherheitseinrichtung für Kraftfahrzeuge bekannt Dabei weist das Kraftfahrzeug einen oder mehrere Airbags auf, die über Schaltmittel deaktivierbar sind. Die Schaltmittel sind dabei in Form eines Deaktivierungsschalters ausgebildet.

Aus DE 199 09 403 A die dem Oberbegriff von Anspruch 1 offenbart ist ein Verfahren zur Steuerung eines Insassenschutzsystems mittels einer Zentraleinheit in Abhängigkeit von Beschleunigungssignalen sowie dem Vorliegen wenigstens eines Auslösesperrsignals von einer manuell betätigbaren Auslösesperre bekannt. Eine Überwachung der Auslösesperre ist vorgesehen. Dafür ist eine Auswerteeinheit vorgesehen, die durch Logik-Gatter eine Plausibilitätsprüfung der einzelnen Auslösesperrsignale durchführt, ohne dafür eine aufwändige und störanfällige Software zu verwenden. Die manuell betätigbare Auslösesperre ist als Schaltmittel ausgeführt, wobei der Schaltzustand von der Zentraleinheit und der Auswerteeinheit erfasst wird.

### Vorteile der Erfindung

Die erfindungsgemäße Schutzeinrichtung für ein Fahrzeug mit den Merkmalen des unabhängigen Patentanspruchs hat demgegenüber Vorteile gemäß Patentanspruch 1. Dabei liegt zum einen neben der Auswertung der Schalterstellung durch einen Prozessor auch noch ein weiterer, unabhängig vom Prozessor arbeitender Baustein zur Auswertung der Schalterstellung vor. Damit liegt eine hardwaremäßige Redundanz vor. Dieser Baustein weist wenigstens eine logische Baugruppe zu seiner Funktion auf. Durch die Verwendung solcher logischer Baugruppen ist es möglich, zeitvariante Lösungen beliebig langen Verzögerungs- bzw. Haltzeiten für den logischen Zustand des Bausteins vorzusehen. Durch die Verwendung von logischen Bausteinen spielen dann Toleranzen keine Rolle mehr. Durch die Verwendung von logischen Bausteinen sind auch große Verzögerungs- und Haltezeiten von ein paar hundert Millisekunden leicht realisierbar.

Es ist von Vorteil, dass die wenigstens eine logische Baugruppe derart konfiguriert ist, dass ein zeitliches Verhalten des logischen Zustands der logischen Baugruppe veränderbar ist. Dies kann insbesondere durch den Prozessor vorgenommen werden, der jedoch keinen Einfluss auf die Auswertung des Bausteins des Signals vom Schalter nimmt. Das zeitliche Verhalten bezeichnet hier die Verzögerungs- und Haltezeiten des logischen Zustands.

Durch die in den abhängigen Ansprüchen aufgeführten Maßnahmen und Weiterbildungen sind vorteilhafte Verbesserungen der im unabhängigen Patentanspruch angegebenen Schutzvorrichtung für ein Fahrzeug möglich.

Besonders vorteilhaft ist, dass die wenigstens eine logische Baugruppe als Gatter und/oder als Flip-Flop ausgebildet ist. Dabei kann eine Kombination von verschiedenen Gattern und Flip-Flops vorgesehen sein, um die entsprechenden langen Verzögerungs- bzw. Haltezeiten des logischen Zustands des Bausteins zu ermöglichen. Es ist damit insbesondere ein sogenanntes Einfrieren des logischen Ergebnisses möglich.

Weiterhin ist es von Vorteil, dass der Schalter entweder als ein Widerstandsnetzwerk oder als wenigstens ein Hallsensor ausgebildet ist. Dies sind zwei zuverlässige Schaltungskonzepte für einen Schalter.

Darüber hinaus ist es von Vorteil, dass die Energieversorgung des Schalters entweder aus dem Steuergerät, beispielsweise für die Rückhaltesysteme, also der Schutzvorrichtung, vorgesehen ist, oder dass eine externe Energieversorgung des Schalters bereit gestellt wird, die eine direkte Verbindung zur Fahrzeugbatterie ermöglicht.

Schließlich ist es auch von Vorteil, dass ein UND-Gatter vorgesehen ist, das ein Signal des Bausteins und des Prozessors miteinander verknüpft, so dass nur bei einer logischen Eins beider Eingänge ein neues Ausgangssignal des Bausteins weitergeleitet wird.

### Zeichnung

Ausführungsbeispiele der Erfindung sind in der Zeichnung dargestellt und werden in der nachfolgenden Beschreibung näher erläutert.

Es zeigen
- Figur 1: ein erstes Blockschaltbild der erfindungsgemäßen Schutzeinrichtung und
- Figur 2: ein zweites Blockschaltbild der erfindungsgemäßen Schutzeinrichtung.

### Beschreibung

Es wird heutzutage in Fahrzeugen die Möglichkeit angeboten, den Beifahrerairbag bzw. hintere Seitenairbags durch einen Schalter zu deaktivieren, also durch einen AirbagDeaktivierungsschalter. Dazu wird die Stellung eines beispielsweise Schlüsselschalters vom Airbagsteuergerät ausgewertet. Zur Realisierung des Schalters sind unterschiedliche Konzepte möglich. Gebräuchlich sind hierbei Schalter mit Widerstandsnetzwerken, bei denen der Schalter zwischen zwei verschiedenen Widerstandsteilern umschaltet und Schalter, die aus ein oder zwei Hallsensoren bestehen. Diese werden dann kontaktlos geschaltet, was eine hohe mechanische Robustheit mit sich bringt.

Da die Funktion der Airbagdeaktivierung sicherheitskritisch ist, wird üblicher Weise die Auswertung im Airbagsteuergerät redundant ausgelegt. Üblich ist die Auswertung der Schalterstellung und Aktivierung bzw. Deaktivierung des oder der Airbags per Software und die Auswertung über einen vom Mikrokontroller unabhängigen Hardwarepfad. Abhängig von der Schalterstellung aktiviert bzw. Deaktiviert dieser Hardwarepfad oder Baustein die entsprechenden Rückhaltemittel-Zündkreise für Airbags, Gurtstraffer oder andere Rückhaltemittel, wie beispielsweise ein elektromagnetisches Ventil für einen Überrollbügel zusätzlich hardwaremäßig. Dabei wird sichergestellt, dass auch bei einem defekten Mikrokontroller keine fehlerhafte Auslösung der entsprechenden Zündkreise möglich ist.

Der dazu notwendige Hardwarepfad bzw. Bausteine muss folgende Funktion erfüllen:
- Auswertung der Signalleitungen des Deaktivierungsschalters
- Signalfilterung
- Signalverarbeitung
- Fehlererkennung und -behandlung, also bei einem Defekt des Schalters, Abriss der Batterieversorgung,
- Festlegung von Default-Zuständen nach dem Einschalten
- Definition des Zeitverhaltens: Timeouts, Haltezeiten und Verzögerungen
- Aktivierung bzw. Deaktivierung der definierten Zündkreise per Hardwareeingriff
- Verhalten beim Ausschalten des Airbagsteuergeräts. Hierbei ist zu beachten, dass das Steuergerät nach dem Abschalten der Batterieversorgung noch einige Zeit Energie aus der eigenen Energiereserve schöpft.

Mögliche Lösungen für diesen Baustein im Airbag-Steuergerät bestehen aus diskreten Schaltungen mit Operationsverstärkern und/oder Komparatoren zur Verarbeitung der jeweiligen Eingangssignale der Airbagdeaktivierungsschalter und zur Ansteuerung geeignete Aktivierungs- und Deaktivierungsschaltungen.

Die Aktivierung bzw. Deaktivierung der Rückhaltemittel kann auf verschiedene Weise erfolgen:
- Ein- bzw. Ausschalten der Versorgungsspannung der jeweiligen Zündkreis-IC's
- Ein- bzw. Ausschalten der Zündspannungsversorgung für die entsprechenden Zündkreise
- Auftrennen der Zündkreise, Kurzschließen der Zündkreise nach Masse oder Kurzschließen der Zündpille
- Eingriffe in die logische Ansteuerung der Zündkreise in oder am Zündkreis-IC

Die Signalfilterung und das Zeitverhalten der Schaltung im Normalbetrieb wie auch im Fehlerfall werden dabei durch geeignete Schaltungselemente realisiert. Möglich sind hier RC-Glieder, die jedoch Nachteile aufweisen. Zu solchen Nachteilen zählen eine zeitliche Invarianz, d.h. es ist nur ein bestimmtes Zeitverhalten möglich, keine Unterscheidung verschiedener Betriebszustände ist möglich. Es liegen relativ große Toleranzen vor. Die Dimensionierung, Verfügbarkeit sowie die Baugröße von Widerständen und Kapazitäten ist beschränkt, insbesondere sind Verzögerungs- und Haltezeiten größer als ein paar hundert Millisekunden nur sehr schlecht möglich.

Erfindungsgemäß wird daher der redundante Hardwarepfad durch die Verwendung von logischen Baugruppen realisiert. Zu solchen logischen Baugruppen zählen Gatter und Flip-Flops, also Multivibratorschaltungen. Damit lassen sich zeitvariante Lösungen mit beliebig langen Verzögerungs- bzw. Haltezeiten darstellen. Dabei kann der Mikrokontroller oder Prozessor die zeitliche Steuerung der Logikbaugruppen übernehmen. Der Prozessor hat dabei jedoch nur die Möglichkeit, das zeitliche Verhalten des Bausteins zur Auswertung des Zustands der Airbagdeaktivierungsschalter zu steuern, nicht aber den Zustand der Rückhaltemittelaktivierung bzw. -deaktivierung. Dies ist wichtig, um das Konzept der Redundanz zu wahren.

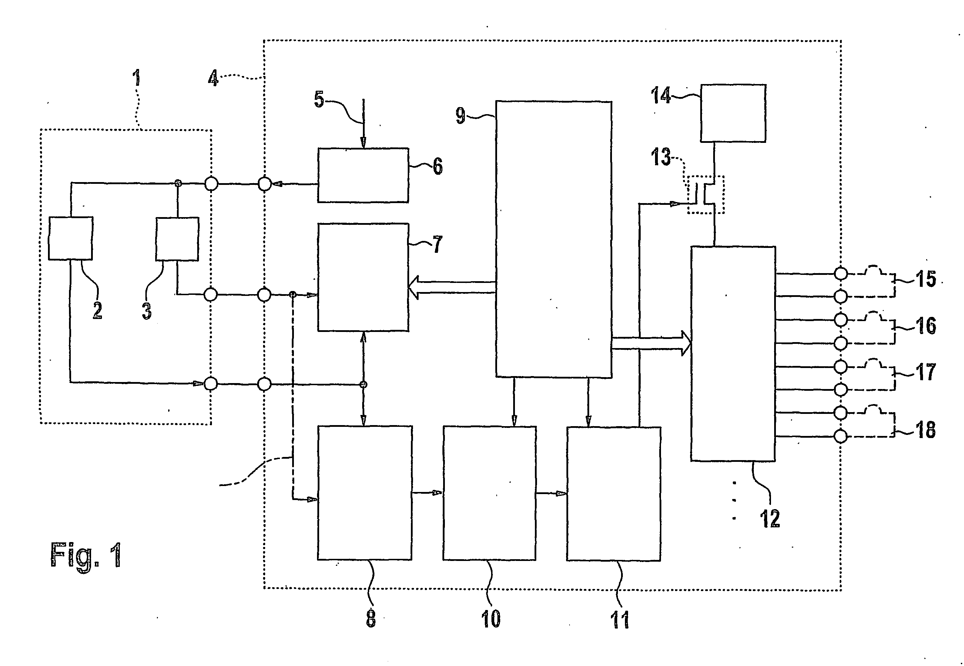

Figur 1 zeigt in einem ersten Blockschaltbild die erfindungsgemäße Schutzeinrichtung. Die erfindungsgemäße Schutzeinrichtung weist einen Airbagdeaktivierungsschalter 1 und ein Airbagsteuergerät 4 auf, die miteinander verbunden sind. Der Airbagdeaktivierungsschalter 1 weist hier zwei Hallsensoren 2 und 3 auf, die an einer Elektrode zusammengeschaltet sind und dort vom Steuergerät 4 und einem Strombegrenzer 6 die Energie erhalten. Der Strombegrenzer 6 wird selbst von der Batteriespannung 5 versorgt. Auf der anderen Seite ist der Hallsensor 2 mit zwei Komponenten des Steuergeräts 4 verbunden. Zum einen mit einem Baustein 7, der die Spannungsversorgung, Kommunikationsschnittstellen und analogen Eingänge umfasst, sowie ein Analog-Digital-Wandler. Zum anderen mit einem Baustein 8, der das Signal des Hallsensors 2 verarbeitet und bewertet. Hier gabelt sich also die Verarbeitung der Sensorsignale in zwei Pfade. Zum einen wird über den Baustein 7 das digitalisierte Hallsignal zum Mikrokontroller 9 übertragen, der dieses verarbeitet um zu erkennen, ob der Deaktivierungsschalter betätigt wurde oder nicht. Parallel dazu führt dies auch der Baustein 8 durch, wobei auch der Baustein 8 Zugang zu einem Analog-Digital-Wandler hat, um auch hier eine digitale Auswertung durchführen zu können. Auch die andere Elektrode des Hallsensors 2 ist zum einen an den Baustein 7 und zum anderen an den Baustein 8 angeschlossen, um auch hier die redundante Verarbeitung der Hallsensorsignale zu ermöglichen.

Entsprechend der Schalterstellung des Deaktivierungsschalters 1 aktiviert bzw. deaktviert der Prozessor 9 die Auslösung der Rückhaltemittel per Software. Im Baustein 8 erfolgt die Filterung und die Auswertung von einem oder beiden Hallsensorsignalen. Daraus erfolgt dann die hardwaremäßige Ansteuerung des Sicherheitshalbleiters 13 zur Aktivierung bzw. Deaktivierung der entsprechenden Zündkreise. Dazwischen ist jedoch noch der Block 10 und auch der Block 11 geschaltet. Der Block 10 ermöglicht die Aktivierung der Airbagzündkreise abhängig vom Status des Deaktivierungsschalters und verknüpft dies mit einer zusätzlichen Freigabe durch den Prozessor 9. Damit ist es möglich, die Airbagendstufen 12 erst durch den Prozessor 9 freizugeben, wenn tatsächlich in einem Crashfall eine Auslösung stattfinden soll. Unabhängig davon, ob der Deaktivierungsschalter auf der Stellung "Ein" bzw. "Aus" steht. Durch den Block 10 hat der Mikrokontroller 9 jedoch nur die Möglichkeit, die Endstufen 12 über den Sicherheitshalbleiter 13 zu aktivieren, wenn auch der Deaktivierungsschalter 1 in der Stellung "Ein" ist. Steht der Deaktivierungsschalter 1 auf "Aus", so sind die Endstufen 12 jedoch unabhängig von der Prozessor-Enable-Leitung zum Block 10 deaktiviert. Vor allem bei Airbagsteuergeräten mit einer Gleichstromzündung stellt diese Funktion einen zusätzlichen Schutz gegen Fehlauslösung bei Defekten im Endstufen-IC 12 dar. Alternativ ist es möglich, den Block 10 weg zu lassen. Das Ausgangssignal des Blocks 10 geht an einen Block 11, der eine logische Schaltungseinheit darstellt, die beispielsweise mittels Flip-Flops realisiert werden kann. Dieser Block ermöglicht eine Speicherung bzw. ein Einfrieren des Deaktivierungsschalters-Zustands. Die Speicherung ist dabei flüchtig, d.h. sie bleibt beim Ausschalten des Airbag-Steuergeräts nicht erhalten. Der Prozessor 9 hat die Möglichkeit zu steuern, ob der logische Zustand des Sicherheitshalbleiters 13 und damit die Aktivierung bzw. Deaktivierung der entsprechenden Airbagzündkreise 15 bis 18 eingefroren wird und damit von eventuellen Schalterstellungsänderungen des Deaktivierungsschalters 1 unabhängig wird, oder ob jede Änderung der Schalterstellung unmittelbar zu einer Aktivierung bzw. Deaktivierung der Airbagzündkreise 15 bis 18 führt. Wichtig hierbei ist wiederum, dass der Prozessor 9 nur die Möglichkeit hat, den Zustand des Sicherheitshalbleiters 13 einzufrieren, aber keinen Einfluss auf den Zustand selbst ausüben kann. Durch dieses Konzept einer logischen Speicherung bzw. Einfrieren des Zustands des Hardwarepfads ergeben sich vielfältige und sehr flexible Möglichkeiten zur Steuerung der Auswertung des Deaktivierungsschalters 1:
- beliebige Halte- bzw. Verzögerungszeiten sind möglich
- der Zustand des Hardwarepfads kann im Fehler-, Energiereserve- oder Crashfall eingefroren werden
- es ist möglich zu steuern, ob der Zustand des Deaktivierungsschalters 1 nur einmal zu Beginn eines Einschaltzyklus eingelesen und übernommen wird, oder ob eine Änderung der Schalterstellung zu jedem beliebigen Zeitpunkt zulässig ist.

Der Block 11 ist dann wie gesagt an den Sicherheitshalbleiter 13 angeschlossen, der einerseits mit der Energiereserve 14 verbunden ist und andererseits mit den Endstufen 12. Die Energiereserve 14 ist üblicher Weise wenigstens ein Kondensator, der beim Abreißen der Verbindung zur Batterie für eine gewisse Zeit eine Energie zur Weiterarbeit bereitstellt. Der Prozessor 9 ist über einen Datenausgang mit den Endstufen 12 direkt verbunden, um softwaremäßig diese anzusteuern. Die Endstufen 12 sind mit den Zündkreisen 15 bis 18 jeweils verbunden. Der Prozessor 9 ist selbst, wie oben dargestellt, über eine Enable-Leitung mit dem Block 10 verbunden, um hier eine UND-Verknüpfung herzustellen und auch mit dem Block 11, um das Zeitverhalten zu beeinflussen, wie es oben dargestellt wurde.

Bei dem Sicherheitshalbleiter 13 handelt es sich üblicherweise um einen Transistorschalter.

Die erfindungsgemäße Schutzeinrichtung hat den Vorteil, dass sie unabhängig von der Ausführungsform des Deaktivierungsschalters 1 ist, d.h. es ist egal, ob es sich um ein Widerstandsnetzwerk oder ein oder zwei Hallsensoren handelt. Weiterhin ist sie unabhängig von der Art der Versorgung des Deaktivierungsschalters 1. Sie ist auch unabhängig davon, ob der Hardwarepfad nur einen Hallsensor bzw. ein Widerstandsnetzwerk oder zwei bzw. mehrere Hallsensoren bzw. Widerstandsnetzwerke auswertet. Sie ist weiterhin unabhängig von der Art der zu deaktivierenden Rückhaltemittel. Die Erfindung ist auch unabhängig von der Art der Deaktivierung der Rückhaltemittel, also ob es sich um ein Ein- und Ausschalten der Versorgungsspannung der jeweiligen Zündkreis-IC's oder der Zündspannungsversorgung oder einem Auftrennen der Zündkreise bzw. einem Kurzschließen der Zündkreise bzw. einem Eingriff in die logische Ansteuerung der Zündkreise handelt. Die Erfindung ist auch unabhängig davon, ob das Einlesen der Stellung des Deaktivierungsschalters 1 im Softwarepart über einen separaten IC erfolgt oder direkt durch den Mikrokontroller, d.h. es liegt ein A/D-Wandler im Mikrokontroller selbst vor. Die Reihenfolge der Blöcke 10 und 11 kann auch vertauscht werden.

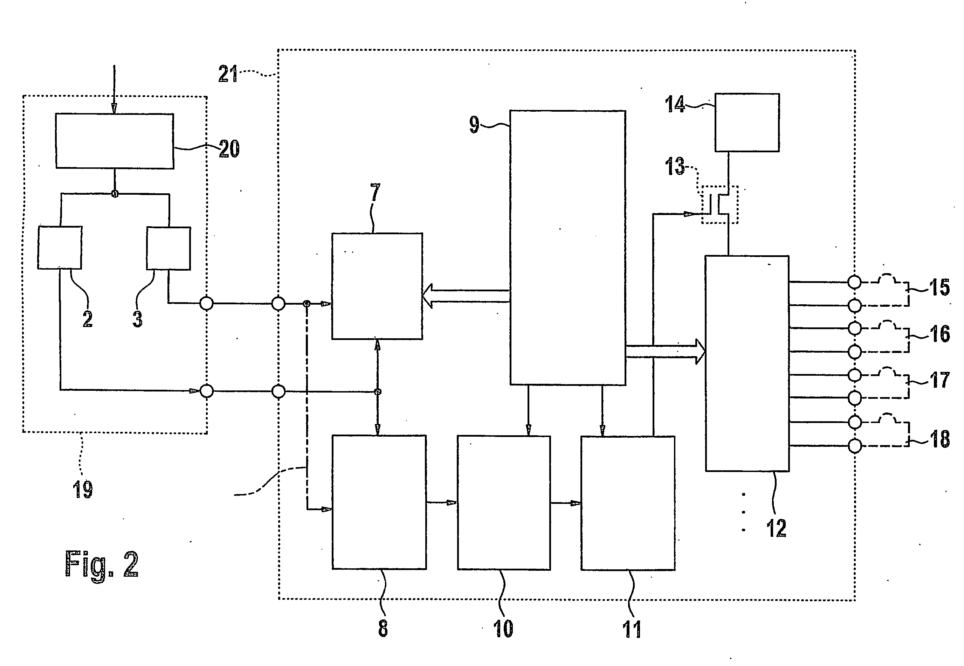

Figur 2 zeigt ein zweites Blockschaltbild der erfindungsgemäßen Schutzeinrichtung. Der Deaktivierungsschalter 19 und das Steuergerät 21 weisen die gleichen Elemente auf, bis auf die Energieversorgung des Deaktivierungsschalters 19. Eine Strombegrenzung 20 bzw. Sicherung ist nun direkt beim Deaktivierungsschalter 19 angeordnet und sorgt so für eine externe Versorgung des Deaktivierungsschalters. Die übrigen Elemente sind genau so wie in Figur 1 bezeichnet und angeordnet.

## Patentansprüche

1. Schutzvorrichtung für ein Fahrzeug, wobei die Schutzvorrichtung durch einen Schalter (1, 19) deaktivierbar ist, wobei eine Schalterstellung durch einen Prozessor (9) und durch einen weiteren Baustein (8) unabhängig von einander überprüfbar ist, wobei der weitere Baustein (8) wenigstens eine logische Baugruppe aufweist, **dadurch gekennzeichnet, dass** die logische Baugruppe derart konfiguriert ist, dass ein zeitliches Verhalten eines logischen Zustands der logischen Baugruppe veränderbar ist, indem der logische Zustand eingefroren wird.

2. Schutzeinrichtung nach Anspruch 1, **dadurch gekennzeichnet, dass** die wenigstens eine logische Baugruppe als Gatter und/oder als ein Flip-Flop ausgebildet ist.

3. Schutzeinrichtung nach Anspruch 1, **dadurch gekennzeichnet, dass** der Prozessor (9) das zeitliche Verhalten verändert.

4. Schutzeinrichtung nach einem der vorhergehenden Ansprüche, **dadurch gekennzeichnet, dass** der Schalter ein Widerstandsnetzwerk aufweist.

5. Schutzeinrichtung nach einem der Ansprüche 1 bis 3, **dadurch gekennzeichnet, dass** der Schalter wenigstens einen Hallsensor aufweist.

6. Schutzeinrichtung nach einem der vorhergehenden Ansprüche, **dadurch gekennzeichnet, dass** die Energieversorgung des Schalters (1, 19) aus einem Steuergerät (4) der Schutzeinrichtung vorgesehen ist.

7. Schutzeinrichtung nach einem der Ansprüche 1 bis 5, **dadurch gekennzeichnet, dass** die Energieversorgung des Schalters (19) extern vorgesehen ist.

8. Schutzeinrichtung nach einem der vorherigen Ansprüche, **dadurch gekennzeichnet, dass** die erfindungsgemäße Schutzeinrichtung ein Halten des logischen Zustands der logischen Baugruppe ermöglicht.

9. Schutzeinrichtung nach einem der vorherigen Ansprüche, **dadurch gekennzeichnet, dass** der Baustein (8) und der Prozessor (9) mit einem UND-Gatter (10) verbunden ist, wobei das UND-Gatter mit einer Zündkreisansteuerung (12, 13) verbindbar ist.

## Claims

1. Protective device for a vehicle, wherein the protective device can be deactivated by means of a switch (1, 19), wherein a switch position can be checked by a processor (9) and by a further module (8) independently of one another, wherein the further module (8) has at least one logic unit, **characterized in that** the logic unit is configured in such a way that a time behaviour of a logic state of the logic unit can be varied by freezing the logic state.

2. Protective device according to Claim 1, **characterized in that** the at least one logic unit is embodied as a gate and/or as a flip-flop.

3. Protective device according to Claim 1, **characterized in that** the processor (9) varies the time behaviour.

4. Protective device according to one of the preceding claims, **characterized in that** the switch is a resistance network.

5. Protective device according to one of Claims 1 to 3, **characterized in that** the switch has at least one Hall sensor.

6. Protective device according to one of the preceding claims, **characterized in that** the power supply of the switch (1, 19) is provided from a control unit (4) of the protective device.

7. Protective device according to one of Claims 1 to 5, **characterized in that** the power supply of the switch (19) is provided externally.

8. Protective device according to one of the preceding claims, **characterized in that** the protective device according to the invention permits the logic state of the logic unit to be held.

9. Protective device according to one of the preceding claims, **characterized in that** the module (8) and the processor (9) are connected to an AND gate (10), wherein the AND gate can be connected to an ignition circuit driver (12, 13).

## Revendications

1. Dispositif de protection pour un véhicule, ce dispositif de protection pouvant être désactivé par un commutateur (1, 19),
une position du commutateur pouvant être contrôlée par un processeur (9) et par un autre composant (8) indépendamment l'un de l'autre,
l'autre composant (8) ayant au moins un ensemble logique,
**caractérisé en ce que**
l'ensemble logique est configuré pour permettre de modifier le comportement dans le temps d'un état logique de l'ensemble logique en figeant l'état logique.

2. Dispositif de protection selon la revendication 1,
**caractérisé en ce que**
l'ensemble logique est une porte et/ou une bascule bistable Flip-Flop.

3. Dispositif de protection selon la revendication 1,
**caractérisé en ce que**
le processeur (9) change le comportement dans le temps.

4. Dispositif de protection selon l'une quelconque des revendications précédentes,
**caractérisé en ce que**
le commutateur comporte un réseau de résistances.

5. Dispositif de protection selon l'une des revendications 1 à 3,
**caractérisé en ce que**
le commutateur comporte au moins un capteur à effet Hall.

6. Dispositif de protection selon l'une quelconque des revendications précédentes,
**caractérisé en ce que**
l'alimentation en énergie du commutateur (1, 19) est assurée à partir de l'appareil de commande (4) de l'installation de protection.

7. Dispositif de protection selon l'une quelconque des revendications 1 à 5,
**caractérisé en ce que**
l'alimentation en énergie du commutateur (19) se fait de manière externe.

8. Dispositif de protection selon l'une quelconque des revendications précédentes,
**caractérisé en ce que**
l'installation de protection selon l'invention permet de maintenir l'état logique des ensembles logiques.

9. Dispositif de protection selon l'une quelconque des revendications précédentes,
**caractérisé en ce que**
le composant (8) et le processeur (9) sont reliés à une porte ET (10) et cette porte ET (10) est reliée à une commande de circuit d'allumage (12, 13).
